# EUROPEAN PATENT APPLICATION

(11) **EP 4 478 443 A1**
(43) Date of publication of application: **18.12.2024**
(21) Application number: 23822736.7
(22) Date of filing: 29.03.2023
(51) Int. Cl.: H01M 4/131, H01M 4/133, H01M 4/134

(54) **ELECTRODE SHEET AND BATTERY**

(30) Priority: 17.06.2022 CN 202210688699; 17.06.2022 CN 202221520256 U
(71) Applicant: Zhuhai CosMX Battery Co., Ltd., Zhuhai, Guangdong 519180 (CN)
(72) Inventor: CHEN, Sha, Zhuhai, Guangdong 519180 (CN); ZHOU, Qiao, Zhuhai, Guangdong 519180 (CN); LI, Guoliang, Zhuhai, Guangdong 519180 (CN); PENG, Ning, Zhuhai, Guangdong 519180 (CN)
(74) Representative: Murgitroyd & Company
(86) International application number: PCT/CN2023/084615
(87) International publication number: WO 2023/241165

(57) **Abstract**

Disclosed is an electrode plate and a battery. An electrode plate provided in the present application includes a first current collector and a first functional layer disposed on at least one side of the first current collector, where a plurality of first regions and a plurality of second regions are alternately distributed on a surface of the first functional layer. A content ratio of an element oxygen to an element silicon in the first functional layer within the first region is greater than 4:1. The present application provides the electrode plate and the battery, to at least resolve a problem of low initial efficiency of a lithium-ion battery, and increase battery capacity, thereby improving battery energy density.

## Description

The present application claims priority to Chinese Patent Application No. 202210688699.X, filed with the China National Intellectual Property Administration on June 17, 2022 and entitled "ELECTRODE PLATE AND BATTERY", and Chinese Patent Application No. "202221520256.1 ", filed with the China National Intellectual Property Administration on June 17, 2022 and entitled "ELECTRODE PLATE AND BATTERY", which are incorporated herein by reference in their entireties.

### FIELD OF THE INVENTION

The present application relates to the field of lithium-ion battery technologies, and in particular, to an electrode plate and a battery.

### BACKGROUND OF THE INVENTION

Lithium-ion batteries are widely used in fields of electric vehicles, power tools, and consumer electronics due to their high energy density and long service life. In order to improve energy density of lithium-ion batteries, negative electrode plates of the batteries have become a hot research topic for related companies.

At present, commercial negative electrode plates of lithium-ion batteries mainly use graphite-like carbon-based negative electrode materials. Compared with graphite, silicon-containing negative electrode materials have significant advantages in energy density. However, during an actual charge-discharge process, each silicon atom is combined with 4.4 lithium atoms on average, and lithium ions released from a positive electrode cannot return from a silicon negative electrode. Initial efficiency is extremely low, and is only 69%, which reduces utilization of lithium ions, thereby reducing battery capacity.

Therefore, it is urgent to resolve a problem of low initial efficiency of lithium-ion batteries.

### BRIEF DESCRIPTION OF THE INVENTION

The present application provides an electrode plate and a battery, to at least resolve a problem of low initial efficiency of lithium-ion batteries.

To achieve the foregoing objective, the present application provides an electrode plate, including a first current collector and a first functional layer disposed on at least one side of the first current collector, where a plurality of first regions and a plurality of second regions are alternately distributed on a surface of the first functional layer. A content ratio of an element oxygen to an element silicon in the first functional layer within the first region is greater than 4:1.

According to the electrode plate provided in the present application, a plurality of first regions and a plurality of second regions are alternately distributed on the surface of the first functional layer, and the first region is used for supplementation with a lithium material. The content ratio of the element oxygen to the element silicon in the first functional layer within the first region is greater than 4:1, to ensure easy formation of a lithium silicate, which can reduce a battery expansion rate during a cycling process. In the present application, the electrode plate is supplemented with the lithium material in advance, so that during an initial charge-discharge process of a battery processed with the electrode plate provided in the present application, the supplemented metallic lithium is utilized to form the SEI film, thereby reducing a loss of a positive lithium source, improving utilization of lithium ions, and achieving an effect of improving initial Coulomb efficiency of the battery.

In a possible implementation, a carbon element, the element oxygen, an element fluorine, an element phosphorus, and the element silicon are included in the first region.

In a possible implementation, a content ratio of the element fluorine to the element phosphorus in the first functional layer within the first region is greater than 7:1.

In a possible implementation, a carbon element, the element oxygen, an element fluorine, an element phosphorus, and the element silicon are included in the second region.

In a possible implementation, a content ratio S1 :S2 of the element oxygen to the element silicon in the first functional layer within the second region satisfies: 2:1 ≤ S1:S2 ≤ 4:1.

In a possible implementation, a content ratio S3:S4 of the element fluorine to the element phosphorus in the first functional layer within the second region satisfies: 6:1 ≤ S3:S4 ≤ 7:1.

In a possible implementation, a content of the element fluorine in the first functional layer located in the first region is greater than a content of the element fluorine in the first functional layer located in the second region.

In a possible implementation, a content of the element phosphorus in the first functional layer located in the first region is greater than a content of the element phosphorus in the first functional layer located in the first region.

In a possible implementation, a content of the element oxygen in the first functional layer located in the first region is greater than a content of the element oxygen in the first functional layer located in the second region.

In a possible implementation, a width of the second region ranges from 0 µm to 4 mm; and/or
a width of the first region ranges from 100 µm to 4 mm.

In a possible implementation, the first functional layer includes active material particles; and
the active material particles include at least one of a silicon material and a silicon oxide material as well as a carbon material, where a mass of the silicon material and/or the silicon oxide material accounts for 7% to 50% of a total mass of the active material particles; or
the active material particles include a carbon material and graphite; or
the active material particles include at least one of a silicon material and a silicon oxide material as well as a carbon material, where a mass of the silicon material and/or the silicon oxide material accounts for 7% to 50% of a total mass of the active material particles.

In a possible implementation, a first included angle is formed between an extension direction of the first region and a width direction of the first functional layer, and the first included angle ranges from 0° to 45°; and/or
a ratio of a total area of the plurality of first regions to a total area of the second regions ranges from 0.7: 1 to 3:1; and/or
with respective to a surface of the first current collector, a portion, farthest from the first current collector, of the first region is higher than the second region, and a height difference between the portion, farthest from the first current collector, of the first region and a portion, farthest from the first current collector, of the second region ranges from 0.1 µm to 8 µm.

In a possible implementation, the electrode plate further includes a first tab and a first adhesive layer that is formed on a surface of the first functional layer, the first functional layer is provided with a first groove, at least a part of the first tab is located in the first groove and is covered by the first adhesive layer, and the first adhesive layer covers at least one of the first regions.

In a possible implementation, the first groove has a first side, a second side, and a third side, and a direction from the first side to the second side is parallel to a length direction of the first functional layer;
a part of the first adhesive layer that is located on a surface, on the first side of the first groove, of the first functional layer covers 0 to 8 of the first regions; and/or
a part of the first adhesive layer that is located on a surface, on the second side of the first groove, of the first functional layer covers 0 to 8 of the first regions; and/or
a part of the first adhesive layer that is located on a surface, on the third side of the first groove, of the first functional layer covers 0 to 40 of the first regions; and/or
a part of the first adhesive layer that is located on a surface, on the first side of the first groove, of the first functional layer has a width ranging from 1 mm to 5 mm in the length direction of the first functional layer; and/or
a part of the first adhesive layer that is located on a surface, on the second side of the first groove, of the first functional layer has a width ranging from 1 mm to 5 mm in the length direction of the first functional layer.

The present application further provides a battery, including a seal housing and an electrochemical cell located inside the seal housing, where the electrochemical cell includes a first electrode plate and a second electrode plate, the first electrode plate is the electrode plate described above, and a polarity of the second electrode plate is opposite to a polarity of the first electrode plate.

In a possible implementation, a second adhesive layer is disposed on a region that is on one end of the second electrode plate and that is covered by the first electrode plate, and a quantity of the first regions of the first electrode plate that correspond to the second adhesive layer ranges from 0 to 20; and/or
the second electrode plate includes a second current collector and a second functional layer disposed on a surface of the second current collector, one end of the second electrode plate has a second foil uncoating region on which the second functional layer is not disposed, and the second adhesive layer covers at least a part of the second foil uncoating region and extends from the second foil uncoating region to the surface of the second functional layer; and/or
a width of the second adhesive layer in a length direction of the second electrode plate ranges from 3 mm to 5 mm.

In a possible implementation, the first functional layer is provided with a first groove, and a third adhesive layer corresponding to a position of the first groove is disposed on a surface of the second electrode plate; and/or
the second electrode plate includes a second current collector and a second functional layer disposed on a surface of the second current collector, the second functional layer is provided with a second groove and a fourth adhesive layer covering the second groove, the second electrode plate is provided with a second tab, and the second tab is at least partially located in the second groove and is covered by the fourth adhesive layer

In a possible implementation, the first groove has a first side, a second side, and a third side, a first projection of the third adhesive layer onto the first electrode plate covers at least one of the first regions, and satisfies the following: a part of the first projection on the first side of the first groove covers 0 to 8 of the first regions; and/or
a part of the first projection on the second side of the first groove covers 0 to 8 of the first regions; and/or
a part of the first projection on the third side of the first groove covers 0 to 40 of the first regions; and/or
the second groove has a fourth side, a fifth side, and a sixth side, a projection of the fourth adhesive layer onto the first electrode plate covers at least one of the first regions, and satisfies the following: a projection of a part of the fourth adhesive layer on the fourth side of the second groove onto the first electrode plate covers 0 to 8 of the first regions; and/or
a projection of a part of the fourth adhesive layer on the fifth side of the second groove onto the first electrode plate covers 0 to 8 of the first regions; and/or
a projection of a part of the fourth adhesive layer on the sixth side of the second groove onto the first electrode plate covers 0 to 40 of the first regions.

According to the electrode plate and the battery provided in the present application, the content ratio of the element fluorine to the element phosphorus in the first region is greater than 7:1, and the excessive element fluorine chemically reacts with lithium ions to generate lithium fluoride, namely, a passivation layer. The SEI film rich in inert substance LiF improves stability of the SEI film, thereby improving cycling stability of the silicon negative electrode material. During a forming process of a SEI film, lithium ions in the positive electrode are consumed in advance, resulting in low initial efficiency of the battery. Herein, the SEI film is formed by fully utilizing supplemented metallic lithium. After the SEI film is processed into a battery, a loss of a lithium source in the positive electrode plate can be effectively reduced, thereby improving utilization of lithium ions and achieving an effect of improving initial Coulomb efficiency of the battery.

According to the electrode plate and the battery provided in the present application, a content ratio of the element fluorine to the element phosphorus is greater than 7:1, so that a SEI film rich in inert substance LiF is formed, and stability of the SEI film is improved, thereby improving a cycling stability of the silicon negative electrode material.

According to the electrode plate and the battery provided in the present application, a plurality of first regions are spaced by second regions, that is, every two adjacent first regions are spaced by a second region that is not supplemented with lithium, so that a supplemented lithium region does not fully cover an entire surface of the first functional layer. The second region makes it easier for an electrolyte solution to wet the electrode plate, to reduce side reactions between metallic lithium and the electrolyte solution, thereby improving utilization of metallic lithium, optimizing performance of the electrode plate and the battery, and significantly improving capacity of the battery, and also significantly improving cycling performance of the battery. In addition, the first adhesive layer is disposed on the surface of the first functional layer, and the first adhesive layer covers at least one first region, which can prevent a problem of lithium deposition in the first region and improve performance, such as safety, of the electrode plate and the battery.

The electrode plate and the battery provided in the present application can effectively reduce an expansion effect of the battery, increase a quantity of charge-discharge cycles of the battery, and help extend service life of the battery.

### BRIEF DESCRIPTION OF THE DRAWINGS

To describe the technical solutions in embodiments of the present application or in the conventional technology more clearly, the following briefly describes the accompanying drawings required for describing embodiments or the conventional technology. Apparently, the accompanying drawings in the following description show some embodiments of the present application, and a person of ordinary skill in the art may still derive other drawings from these accompanying drawings without creative efforts.
FIG. 1 is a schematic diagram of a structure of an electrode plate according to an embodiment of the present application.
FIG. 2 is a SEM image obtained from a first region and a second region of an electrode plate according to an embodiment of the present application.
FIG. 3 is a SEM image of a second region of an electrode plate according to an embodiment of the present application.
FIG. 4 is a surface scan EDS image of a SEM image of a first region of an electrode plate according to an embodiment of the present application.
FIG. 5 is a line scan image of a first region and a second region of an electrode plate according to an embodiment of the present application.
FIG. 6 is a distribution trend diagram of a phosphorus element, at a position of horizontal line AB in FIG. 5, of an electrode plate according to an embodiment of the present application.
FIG. 7 is a distribution trend diagram of a fluorine element, at a position of horizontal line AB in FIG. 5, of an electrode plate according to an embodiment of the present application.
FIG. 8 is a distribution trend diagram of an element oxygen, at a position of horizontal line AB in FIG. 5, of an electrode plate according to an embodiment of the present application.
FIG. 9 is a comparison chart of cycling performance curves of a battery according to an embodiment of the present application and a conventional battery.
FIG. 10 is a comparison chart of cycling performance expansion curves of a battery according to an embodiment of the present application and a conventional battery.
FIG. 11 is a schematic structural diagram of a cross section, perpendicular to a thickness direction of a negative electrode current collector, of a first electrode plate according to an embodiment of the present application.
FIG. 12 is a schematic structural diagram of a cross section, perpendicular to a thickness direction of a negative electrode current collector, of a first electrode plate according to an embodiment of the present application.
FIG. 13 is a schematic structural diagram of a cross section, perpendicular to a thickness direction of a negative electrode current collector, of a second electrode plate according to an embodiment of the present application.
FIG. 14 is a surface morphology diagram, measured by using a 3D microscope, of a first electrode plate according to an embodiment of the present application.
FIG. 15 is a schematic diagram of a placement structure of lithium strips during a manufacturing process of a first electrode plate according to an embodiment of the present application.

### Reference numerals:

10 - first current collector; 11 - first foil uncoating region; 20 - first functional layer; 21 - first groove; 22 - first end covering region; 23 - second end covering region; 30 - first region; 40 - second region; 60 - transition region; 80 - lithium strip; 81 - first adhesive layer; 82 - second adhesive layer; 84 - fourth adhesive layer; 85 - third region; 86 - fourth region; 87 - fifth region; 91 - first tab; 92 - second functional layer; 921 - second groove; and 93 - second foil uncoating region.

### DETAILED DESCRIPTIONS OF THE INVENTION

To make objectives, technical solutions, and advantages of the present application clearer, the following clearly describes technical solutions in the present application with reference to accompanying drawings in the present application. Clearly, described embodiments are merely some but not all of embodiments of the present application. All other examples obtained by a person of ordinary skill in the art based on the examples of the present application without creative efforts shall fall within the protection scope of the present application.

Although an electrode plate processed with a silicon-oxygen negative electrode material has a desirable specific capacity, lithium ions released from a positive electrode are embedded in the silicon-oxygen negative electrode material and preferentially react with the silicon oxide material to generate inactive materials such as a lithium silicate and a lithium-silicon alloy. Silicon particles rupture, resulting in repeated growth-rupture-repair of a solid electrolyte interphase (solidelectroly teinterface, SEI for short) film. As a result, the SEI film accumulates in large quantities during a growth process, consuming lithium sources, and resulting in capacity fading, low initial efficiency, and poor cycling performance.

In view of the background described above, according to an electrode plate and a battery provided in the present application, a plurality of first regions 30 and a plurality of second regions 40 are alternately distributed on a surface of a first functional layer 20. A content ratio of an element oxygen to an element silicon in the first functional layer 20 within the first region 30 is greater than 4:1, to ensure easy formation of a lithium silicate, which can reduce a battery expansion rate during a cycling process. During a forming process of a SEI film, lithium ions in the positive electrode are consumed in advance, resulting in low initial efficiency of the battery. The SEI film is formed by using supplemented metallic lithium to reduce a loss of positive electrode lithium ions, thereby improving utilization of lithium ions and achieving an effect of improving initial efficiency of the battery.

An electrode plate and a battery provided in the present application are described below with reference to the accompanying drawings.

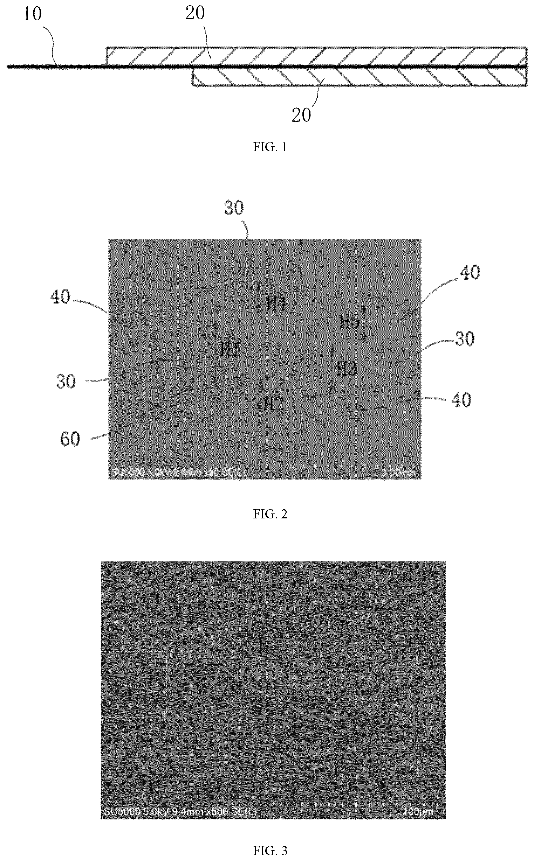

Refer to FIG. 1. The present application provides an electrode plate, including: a first current collector 10 and a first functional layer 20 disposed on at least one side of the first current collector 10, where a plurality of first regions 30 and a plurality of second regions 40 are alternately distributed on a surface of the first functional layer 20. A content ratio of an element oxygen to an element silicon in the first functional layer 20 within the first region 30 is greater than 4:1. An element lithium is included in the first region 30.

According to the electrode plate provided in the present application, the first functional layer 20 is an active material layer, a plurality of first regions 30 and a plurality of second regions 40 are alternately distributed on the surface of the first functional layer 20, and the first region 30 is used for supplementation with a lithium material. The content ratio of the element oxygen to the element silicon in the first functional layer 20 within the first region 30 is greater than 4:1, to ensure easy formation of a lithium silicate, which can reduce a battery expansion rate during a cycling process.

Wetting of an electrolyte solution generally relies on capillary action. The present application provides an electrode plate, which employs a structure in which the second regions 40 and the first regions 30 are alternately distributed. The electrolyte solution can penetrate through the second region 40 to wet the electrode plate, which reduces obstacles to wetting the electrode plate, helps uniform wetting of the electrode plate, and improves a battery wetting effect, thereby increasing cycle life of the battery.

A carbon element, the element oxygen, an element fluorine, an element phosphorus, and the element silicon are included in the first region 30, and the carbon element, the element oxygen, the fluorine element, the phosphorus element, and the element silicon are included in the second region 40.

A content ratio of the element fluorine to the element phosphorus in the first functional layer 20 within the first region 30 is greater than 7:1, so that a SEI film rich in inert substance LiF is formed, and stability of the SEI film is improved, thereby improving a charge-discharge cycle stability of the battery. In the present application, the electrode plate is supplemented with the lithium material in advance, so that during an initial charge-discharge process of a battery processed with the electrode plate provided in the present application, the supplemented metallic lithium is utilized to form the SEI film, thereby reducing a loss of a positive lithium source, improving utilization of lithium ions, and achieving an effect of improving initial Coulomb efficiency of the battery.

In a possible implementation, a content ratio of the element oxygen to the element silicon within the first region 30 may be 4:1,5:1,6:1, or 7:1.

It is easy to understand that if the content ratio of the element oxygen to the element silicon within the first region 30 is greater than 4:1, for example, if the content ratio of the element oxygen to the element silicon is 5:1, the excessive element oxygen chemically reacts with the added lithium ions to generate lithium oxide or lithium carbonate, reducing utilization of lithium ions.

In a possible implementation, a lithium material layer is disposed on the surface of the first functional layer 20 to form the first region 30, and a surface density of lithium contained in the lithium material layer ranges from 0.09 mg/cm² to 0.5 mg/cm². The lithium material layer may be disposed on the surface of the first functional layer 20 through rolling to form the first region 30. The lithium material layer may be a lithium foil, a surface density of the metallic lithium ranges from 0.09 mg/cm² to 0.5 mg/cm², and the first functional layer 20 includes graphite and a silicon material, where a mass of the silicon material accounts for 7% to 50% of a total mass of the active material particles, so that an amount of the metallic lithium matches an amount of the silicon material. The lithium material layer may be a plurality of lithium strips.

The first functional layer 20 includes active material particles.

In a possible implementation, the active material particles include at least one of a silicon material and a silicon oxide material as well as a carbon material, where a mass of the silicon material and/or the silicon oxide material accounts for 7% to 50% of a total mass of the active material particles, and correspondingly, a surface density of metallic lithium contained in the first region 30 ranges from 0.09 mg/cm² to 0.5 mg/cm², so that an amount of the metallic lithium matches an amount of the silicon material and/or the silicon oxide material.

In a possible implementation, the active material particles include a carbon material and graphite.

In a possible implementation, a surface density of metallic lithium ranges from 0.09 mg/cm² to 0.5 mg/cm², and the active material particles include at least one of a silicon material and a silicon oxide material as well as a carbon material, where a mass of the silicon material and/or the silicon oxide material accounts for 7% to 50% of a total mass of the active material particles.

In a possible implementation, as shown in FIG. 1, the electrode plate provided in the present application is a negative electrode plate, and the first current collector 10 may be made of a copper foil, a titanium foil, a nickel mesh, a stainless steel foil, a lithium copper alloy film, or a carbon cloth.

In a possible implementation, the first functional layer 20 is disposed on either side of the first current collector 10.

A content ratio of the element fluorine to the element phosphorus in the first functional layer 20 within the first region 30 is greater than 7:1. During processing of the electrode plate, the first functional layer 20 within the first region 30 comes into contact with lithium ions in advance to undergo a passivation reaction, and a passivation layer rich in inert substance LiF, namely, a SEI film, is formed. During formation of a battery processed in this way, the SEI film rich in inert substance LiF is formed, thereby improving stability of the SEI film and improving cycling stability of the battery. In the present application, the electrode plate is supplemented with the lithium material in advance, so that during an initial charge-discharge process of a battery processed with the electrode plate provided in the present application, the supplemented metallic lithium is utilized to form the SEI film, thereby reducing a loss of a positive lithium source, improving utilization of lithium ions, and achieving an effect of improving initial Coulomb efficiency of the battery.

Since the electrolyte solution is lithium hexafluorophosphate and the content ratio of the element fluorine to the element phosphorus within the first region 30 is greater than 7:1, the excessive element fluorine chemically reacts with lithium ions to generate a SEI film rich in inert substance LiF, thereby improving stability of the SEI film and improving cycling stability of the battery. During a forming process of the SEI film, the added lithium is consumed in advance to form the SEI film, thereby reducing consumption of positive electrode lithium and improving charging/discharging efficiency.

Refer to FIG. 2, which is a picture obtained by capturing the first region 30 and the second region 40 by using a scanning electron microscope (scanning electron microscope, SEM for short) with a magnification range of 50x to 5.0kx. The first region 30 and the second region 40 can be seen. The second region 40 is configured to cause adjacent first regions 30 to be spaced. The second region 40 is a channel for wetting the electrode plate, which helps improve a wetting effect of the electrode plate.

An ultra-thin metallic lithium strip may be prepared by using an asynchronous rolling technology, a metallic lithium-containing region corresponding to the first region 30 and a metallic lithium-free region corresponding to the second region 40 are formed on a surface of the ultra-thin metallic lithium strip, and lithium ions in the metallic lithium strip are transferred to the first region 30, so that the first region 30 is formed on the surface of the first functional layer 20, and the second region 40 corresponds to the metallic lithium-free region.

In a possible implementation, as shown in FIG. 2, in order to satisfy requirements on a surface density of supplemented lithium and wetting uniformity, a width of the first region 30 ranges from 100 µm to 4 mm, that is, a spacing between two adjacent second regions 40 ranges from 100 µm to 4 mm.

In a possible implementation, a spacing between two adjacent second regions 40 may be 100 µm, 1 mm, 2 mm, 3 mm, or 4 mm.

In a possible implementation, in order to satisfy requirements on a surface density of supplemented lithium and wetting uniformity, a width of the second region 40 ranges from 0 µm to 4 mm, that is, a spacing between two adjacent first regions 30 ranges from 0 µm to 4 mm.

According to an electrode plate in the present application, second regions 40 and first regions 30 are alternately distributed, and widths of the second region 40 and the first region 30 are limited, which helps achieve a requirement on a surface density of supplemented lithium and improve uniformity of wetting the electrode plate by an electrolyte solution.

In a possible implementation, a spacing between two adjacent first regions 30 may be 10 µm, 1 mm, 2 mm, 3 mm, or 4 mm.

After lithium ions are partially embedded in silicon particles located in the first region 30, the lithium ions migrate to a region in which no lithium ions are embedded due to a concentration difference and a potential difference, so that a transition region 60 between the first region 30 and the second region 40 is formed, and lithium ions inside the first region 30 are uniformly distributed, to achieve a consistent lithium intercalation state, and avoid problems of lithium deposition and purple spots due to excessive local lithium ions, thereby improving overall uniformity of lithium intercalation.

In order to reduce an expansion rate of the battery during a cycling process, the electrode plate is supplemented with lithium by a process. The metallic lithium in the first region 30 reacts with silicon to generate a lithium silicate as a buffer layer, so as to alleviate expansion of the battery during a cycling process. A content ratio of the element oxygen to the element silicon in the first functional layer 20 located in the first region 30 is greater than 4:1. A content ratio S1:S2 of the element oxygen to the element silicon in the first functional layer 20 within the second region 40 satisfies: 2:1 ≤ S1:S2 ≤ 4:1. In addition, a content of the element oxygen in the first functional layer 20 located in the first region 30 is greater than a content of the element oxygen in the first functional layer 20 located in the second region 40.

In order to prevent silicon particles from rupturing during lithium intercalation, the SEI film repeatedly undergoes growth-rupture-repair. As a result, the SEI film accumulates in large quantities during a growth process, consuming lithium ions, and resulting in capacity fading, low initial efficiency, and poor cycling performance of the battery. The SEI film rich in inert substance LiF is constructed to improve stability of the SEI film, thereby improving cycling stability of the silicon negative electrode material. A content ratio of the element fluorine to the element phosphorus in the first functional layer 20 located in the first region 30 is greater than 7:1. A content ratio S3:S4 of the element fluorine to the element phosphorus in the first functional layer 20 located in the second region 40 satisfies: 6:1 ≤ S3:S4 ≤ 7:1. In addition, a content of the element fluorine in the first functional layer 20 located in the first region 30 is greater than a content of the element fluorine in the first functional layer 20 located in the second region 40. A content of the element phosphorus in the first functional layer 20 located in the first region 30 is greater than a content of the element phosphorus in the first functional layer 20 located in the first region 30.

The present application further provides a battery, including a seal housing and an electrochemical cell located inside the seal housing, where the electrochemical cell includes a first electrode plate and a second electrode plate, and the first electrode plate is the electrode plate described above.

### Embodiment 1

In this embodiment, active material particles of a first functional layer 20 include graphite and a silicon oxide material, and a mass proportion of the silicon oxide material may be 7% of a total mass of the active material particles. Correspondingly, a surface density of metallic lithium contained in the first region 30 may be 0.12. A content ratio S1:S2 of an element oxygen to an element silicon within the first region 30 is 5:1, and a content ratio S3: S4 of an element fluorine to an element phosphorus within the first region 30 is 7:1. A content ratio S1:S2 of the element oxygen to the element silicon within the second region 40 is 4:1, and a content ratio S3:S4 of the element fluorine to the element phosphorus within the second region 40 is 6:1.

### Embodiment 2

In this embodiment, active material particles of a first functional layer 20 include graphite and a silicon oxide material, and a mass proportion of the silicon oxide material may be 20% of a total mass of the active material particles. Correspondingly, a surface density of metallic lithium contained in the first region 30 may be 0.22. A content ratio S1:S2 of an element oxygen to an element silicon within the first region 30 is 6:1, and a content ratio S3:S4 of an element fluorine to an element phosphorus within the first region 30 is 7.5:1. A content ratio S1 :S2 of the element oxygen to the element silicon within the second region 40 is 4:1, and a content ratio S3:S4 of the element fluorine to the element phosphorus within the second region 40 is 6:1.

### Embodiment 3

In this embodiment, active material particles of a first functional layer 20 include graphite and a silicon oxide material, and a mass proportion of the silicon oxide material may be 30% of a total mass of the active material particles. Correspondingly, a surface density of metallic lithium contained in the first region 30 may be 0.32. A content ratio S1:S2 of an element oxygen to an element silicon within the first region 30 is 7:1, and a content ratio S3:S4 of an element fluorine to an element phosphorus within the first region 30 is 8:1. A content ratio S1:S2 of the element oxygen to the element silicon within the second region 40 is 4:1, and a content ratio S3:S4 of the element fluorine to the element phosphorus within the second region 40 is 6:1.

### Embodiment 4

In this embodiment, active material particles of a first functional layer 20 include graphite and a silicon oxide material, and a mass proportion of the silicon oxide material may be 40% of a total mass of the active material particles. Correspondingly, a surface density of metallic lithium contained in the first region 30 may be 0.42. A content ratio S1:S2 of an element oxygen to an element silicon within the first region 30 is 8:1, and a content ratio S3:S4 of an element fluorine to an element phosphorus within the first region 30 is 8.5:1. A content ratio S1 :S2 of the element oxygen to the element silicon within the second region 40 is 4:1, and a content ratio S3:S4 of the element fluorine to the element phosphorus within the second region 40 is 6:1.

### Embodiment 5

In this embodiment, active material particles of a first functional layer 20 include graphite and a silicon oxide material, and a mass proportion of the silicon oxide material may be 50% of a total mass of the active material particles. Correspondingly, a surface density of metallic lithium contained in the first region 30 may be 0.5. A content ratio S1:S2 of an element oxygen to an element silicon within the first region 30 is 9:1, and a content ratio S3:S4 of an element fluorine to an element phosphorus within the first region 30 is 9:1. A content ratio S1:S2 of the element oxygen to the element silicon within the second region 40 is 4:1, and a content ratio S3:S4 of the element fluorine to the element phosphorus within the second region 40 is 6:1.

In the foregoing Embodiment 1 to Embodiment 5, the active material particles in the first functional layer 20 include the graphite and the silicon oxide material, the mass of the silicon oxide material may account for 7% to 50% of the total mass of the active material particles, the graphite may be artificial graphite, natural graphite, or modified graphite, and the surface density of the metallic lithium contained in the first region 30 ranges from 0.09 mg/cm² to 0.5 mg/cm². In this way, an amount of the metallic lithium matches an amount of the silicon particles. If the amount of the metallic lithium is too large, lithium ions react with the electrolyte solution and deposition occurs, reducing utilization of lithium ions. If the amount of the metallic lithium is too small, a lithium supplementation effect is not noticeable, and accordingly improvement in initial efficiency is not noticeable.

### Embodiment 6

In this embodiment, active material particles of a first functional layer 20 include graphite and a silicon oxide material, and a mass proportion of the silicon oxide material may be 7% of a total mass of the active material particles. Correspondingly, a surface density of metallic lithium contained in the first region 30 may be 0.18. A content ratio S1:S2 of an element oxygen to an element silicon within the first region 30 is 6:1, and a content ratio S3:S4 of an element fluorine to an element phosphorus within the first region 30 is 7:1. A content ratio S1:S2 of the element oxygen to the element silicon within the second region 40 is 4:1, and a content ratio S3:S4 of the element fluorine to the element phosphorus within the second region 40 is 6:1.

### Embodiment 7

In this embodiment, active material particles of a first functional layer 20 include graphite and a silicon oxide material, and a mass proportion of the silicon oxide material may be 30% of a total mass of the active material particles. Correspondingly, a surface density of metallic lithium contained in the first region 30 may be 0.28. A content ratio S1:S2 of an element oxygen to an element silicon within the first region 30 is 7.5: 1, and a content ratio S3:S4 of an element fluorine to an element phosphorus within the first region 30 is 8:1. A content ratio S1:S2 of the element oxygen to the element silicon within the second region 40 is 4:1, and a content ratio S3: S4 of the element fluorine to the element phosphorus within the second region 40 is 6:1.

### Embodiment 8

In this embodiment, active material particles of a first functional layer 20 include graphite and a silicon oxide material, and a mass proportion of the silicon oxide material may be 50% of a total mass of the active material particles. Correspondingly, a surface density of metallic lithium contained in the first region 30 may be 0.34. A content ratio S1:S2 of an element oxygen to an element silicon within the first region 30 is 8:1, and a content ratio S3:S4 of an element fluorine to an element phosphorus within the first region 30 is 8.5:1. A content ratio S1 :S2 of the element oxygen to the element silicon within the second region 40 is 4:1, and a content ratio S3:S4 of the element fluorine to the element phosphorus within the second region 40 is 6:1.

In the foregoing Embodiment 6 to Embodiment 8, the active material particles in the first functional layer 20 include the graphite and the silicon oxide material, the mass of the silicon oxide material may account for 7% to 50% of the total mass of the active material particles, and the surface density of the metallic lithium contained in the first region 30 ranges from 0.09 mg/cm² to 0.5 mg/cm². In this way, an amount of the metallic lithium matches an amount of the silicon particles. This avoids a reaction between lithium and the electrolyte solution and occurrence of deposition caused due to excessive metallic lithium, and accordingly reducing utilization of lithium ions, and avoids an unnoticeable lithium supplementation effect and unnoticeable improvement in initial efficiency caused due to a too small amount of metallic lithium.

During processing, after the first functional layer 20 is applied on a surface of the first current collector 10, the first current collector 10 is placed in a dry environment at a temperature of 90°C and baked for 24 hours to control a moisture content below 300 ppm to obtain a semi-finished electrode plate. Then, an ultra-thin metallic lithium strip is prepared by using an asynchronous rolling technology and laminated with the semi-finished electrode plate to prepare an electrode plate.

The present application further provides a battery, including a seal housing and an electrochemical cell located inside the seal housing, where the electrochemical cell includes a first electrode plate and a second electrode plate, and the first electrode plate is the electrode plate described above.

In a possible implementation, the second electrode plate is a positive electrode plate, and the first electrode plate is a negative electrode plate.

During processing, the first electrode plate, the second electrode plate, and a separator are stacked in sequence so that the separator is located between the first electrode plate and the second electrode plate, where the separator serves to separate the first electrode plate from the second electrode plate. Then, the first electrode plate, the second electrode plate, and the separator electrochemical cell are wound to obtain an electrochemical cell, the electrolyte solution is placed in a seal housing, an electrolyte solution is injected into the seal housing. After vacuum packaging, standing, and formation, the electrochemical cell is charged at a constant current of 0.1C to a state of charge (State of Charge, SOC for short) of 4%, and then charged at a constant current of 0.2C to a SOC of 10%, and processes such as shaping and capacity testing are performed, to obtain a soft-pack lithium-ion battery.

In a possible implementation, the seal housing may be an aluminum-plastic film, and the electrolyte solution may include lithium hexafluorophosphate.

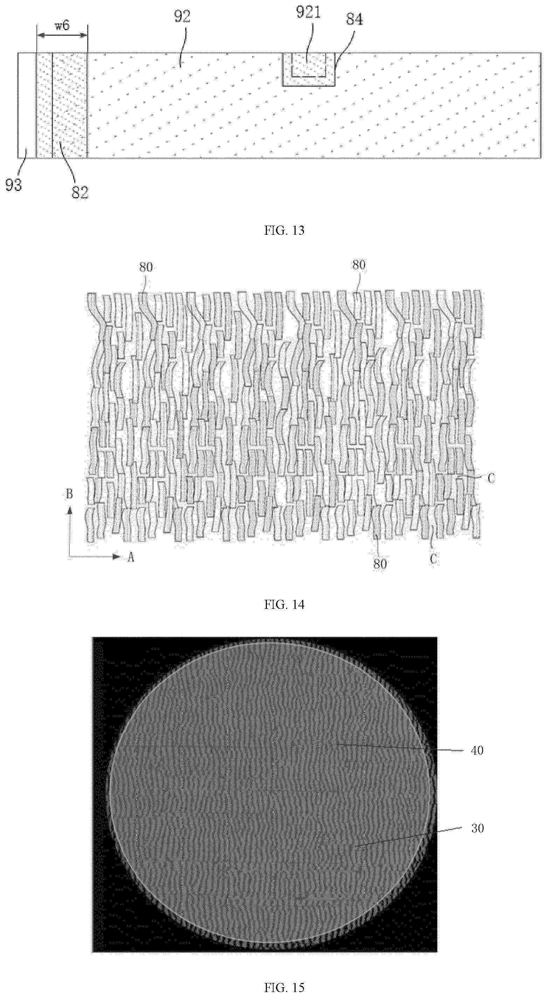

In a possible implementation, the first region 30 is a supplemented lithium region, and the second region 40 is a non-supplemented-lithium region. According to a 3D microscope test, the first region 30 is brighter, and the second region 40 is darker (as shown in FIG. 14).

In a possible implementation, lithium supplementation may be performed according to the following process: As shown in FIG. 15, a plurality of lithium strips 80 are alternately distributed on a surface of a first functional layer 20, and there are gaps C between the plurality of lithium strips 80 that expose the surface of the first functional layer 20. After reactions, such as formation, during a battery preparation process, a region on which the lithium strip 80 is disposed forms a supplemented lithium region, namely, the first region 30. The gap C between the plurality of lithium strips 80 forms a non-supplemented-lithium region, namely, the second region 40. As shown in FIG. 14, the first region 30 is in a discontinuous state. The second region 40 facilitates wettability of the electrolyte solution for the electrode plate, to improve utilization of the lithium strips and optimize performance of the electrode plate and the battery.

During lithium supplementation, an electrode plate precursor having the first functional layer 20 formed thereon may be baked at about 90°C for about 24 hours in a dry environment to control a moisture content below 300 ppm, and then the lithium strips 80 are placed on a surface of the baked electrode plate, and after processing such as lamination, the lithium strips 80 is laminated with the first functional layer 20 for lithium supplementation.

The foregoing electrode plate may be prepared by using a coating method, and its preparation process generally includes steps such as material preparation (preparing a slurry), coating (coating the slurry on a surface of a current collector substrate to form the first functional layer 20), rolling, slitting (slitting according to parameters such as a preset size and a shape of the electrode plate), baking, and then subsequent processes such as lithium supplementation are performed.

In a possible implementation, the lithium strip 80 used may include a short lithium strip having a length less than a width of the first functional layer 20 (distribution of short lithium strips is shown in FIG. 15, and a surface morphology of the electrode plate formed is shown in FIG. 14), and a plurality of short lithium strips may be placed in sequence along a width direction of the first functional layer 20 (a direction indicated by arrow B) to form a column. Then, according to such a process, another column may be formed along a length direction of the first functional layer 20 (a direction indicated by arrow A), and a length of each column may be less than or equal to a width of the electrode plate (a length of the column formed by arrangement of the first region 30 is less than or equal to the width of the electrode plate). However, the present application is not limited thereto. A plurality of short lithium strips may alternatively be irregularly distributed on the surface of the first functional layer 20, or long lithium strips having a length substantially the same as the width of the first functional layer 20 may be spaced and distributed on the surface of the first functional layer 20 (for example, there is a gap between any two adjacent long lithium strips, and after formation, the gap forms the second region 40).

In a possible implementation, an amount of the lithium strips 80 used may satisfy the following: a ratio of a total mass of the lithium strips 80 disposed on the surface of the first functional layer 20 to an area of the surface of the first functional layer 20 (a surface away from the first current collector 10) ranges from 0.09:1 to 0.5:1 (mg:m²).

In a possible implementation, a thickness of the lithium strip 80 may range from 1.9 µm to 9 µm. Due to an extremely high theoretical specific capacity of pure metallic lithium, if an entire surface of the electrode plate is supplemented with lithium, a thickness of the metallic lithium usually needs to be about 1 µm, which is extremely difficult to prepare and has poor consistency. In the present application, ultra-thin metallic lithium strips are used for non-full-surface lithium supplementation. The ultra-thin metallic lithium strips present a non-continuous coverage state such as stripes/ripples on the surface of the first functional layer 20, which can effectively achieve lithium supplementation and improve utilization of metallic lithium while having advantages such as simple preparation and good consistency.

In a possible implementation, a lithium ingot is generally pressed to a thickness at a micrometer level, and then an obtained micrometer-level lithium strip is placed on the surface of the first functional layer 20 for lithium supplementation. For example, in some embodiments, a lithium ingot with a thickness of 200 µm to 2 mm is pressed to form a lithium strip 80 with a thickness of 1.9 µm to 9 µm, which is then placed on the surface of the first functional layer 20 for lithium supplementation.

In a possible implementation, an inorganic salt layer may be an inorganic salt layer formed by embedding a lithium source obtained through lithium supplementation into active material particles in the first region 30, that is, a material included in the inorganic salt layer is an inorganic salt, and the inorganic salt layer is generated by embedding the element lithium supplemented in the first region 30 into the active material particles in the first region 30. The inorganic salt layer includes, for example, at least one of lithium fluoride, lithium carbonate, lithium silicate, and the like.

In a possible implementation, first regions 30 and second regions 40 are alternately distributed/distributed at intervals, that is, a plurality of first regions 30 and a plurality of second regions 40 are distributed on the surface of the first functional layer 20, and the plurality of second regions 40 separate the surface of the first functional layer 20 to form the plurality of first regions 30.

The plurality of first regions 30 may be distributed along the length direction of the first functional layer 20/the electrode plate (a direction indicated by arrow A), that is, the plurality of first regions 30 and the plurality of second regions 40 are alternately distributed in sequence along the length direction of the first functional layer 20/the electrode plate.

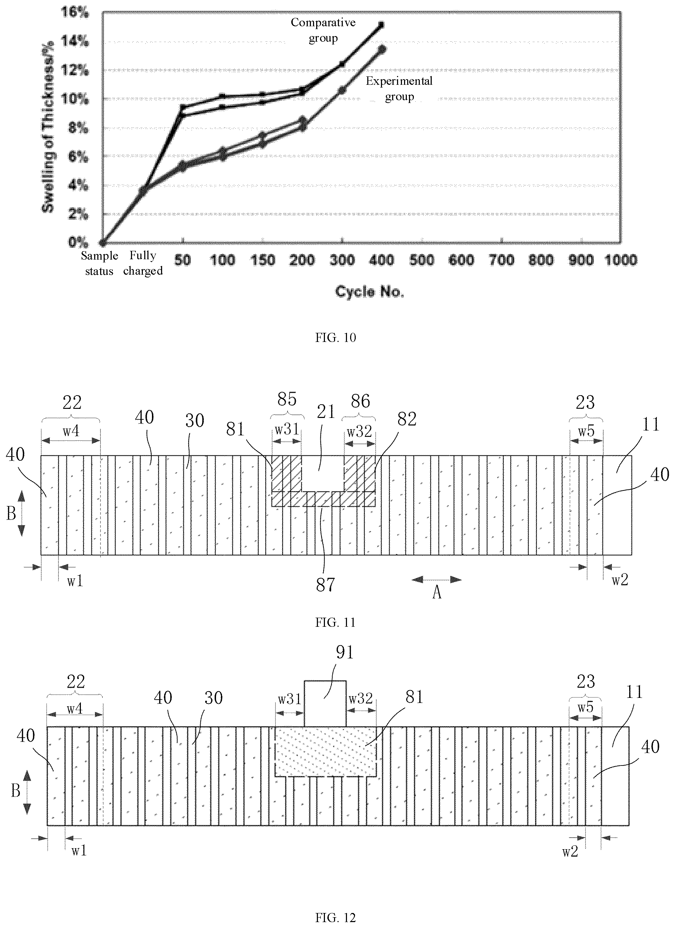

In a possible implementation, as shown in FIG. 11, FIG. 12, and FIG. 14, a first angle may be formed between an extension direction/a length direction of the first region 30 and the width direction of the first functional layer 20, and the first angle may range from 0° to 60°. In a possible implementation, the first angle may range from 0° to 45°, and for example, is 0° (that is, the length direction of the first region 30 is parallel to the width direction of the first functional layer 20), 10°, 20°, 30°, 40° or 45°, or the like. This facilitates lithium supplementation for the electrode plate and wetting of the electrolyte solution while not affecting winding of the electrode plate along its length direction, which is beneficial to manufacturing and performance of the battery.

Extension directions of the plurality of first regions 30 may be the same or different, that is, first angles formed between the extension directions and the width direction of the first functional layer 20 may be the same or different.

In addition, in the width direction of the first functional layer 20/the electrode plate, a distance between a first region 30 closest to an outer edge/edge of the first functional layer 20 and the outer edge of the first functional layer 20 is A, and A may range from 0 mm to 2 mm, and for example, is 0 (that is, the first region 30 is flush with the outer edge of the first functional layer 20), 0.5 mm, 1 mm, 1.5 mm, 2 mm, or the like. A ratio of A to the width of the first functional layer 20 may range from 0 to 0.03, and for example, is 0, 0.01, 0.02, 0.03, or the like.

In a possible implementation, in the width direction of the first functional layer 20, a column is formed by at least one first region 30. The column may be in a continuous state, that is, the column is formed by one first region 30 (the column is not spaced by the second region 40). Alternatively, the column may be in a discontinuous state, that is, the column is formed by a plurality of first regions 30 arranged in sequence along the width direction of the first functional layer 20, where the second region 40 exists between two adjacent first regions 30, which are spaced by the second region 40.

In addition, the first region 30 extends along the width direction of the first functional layer 20. In the width direction of the first functional layer 20, the first region 30 may be a substantially straight structure, or may have a bent/curved structure or the like.

In addition, in the length direction of the first functional layer 20/the electrode plate, a distance between a first region 30 closest to an outer edge of the first functional layer 20 and the outer edge of the first functional layer 20 (that is, a width of a second region 22 closest to the outer edge of the first functional layer 20 in the length direction of the first functional layer 20) may range from 0 mm to 4 mm, for example, ranges from 100 µm to 4 mm.

In a possible implementation, the first functional layer 20 has a first end and a second end opposite to each other, and a direction from the first end to the second end is parallel to the length direction of the first functional layer 20, and a distance w1 between a first region 30 closest to a first end and an edge of the first end of the first functional layer 20 (an edge of the first functional layer 20) ranges from 100 µm to 4 mm, and for example, is 100 µm, 300 µm, 500 µm, 700 µm, 1 mm, 2 mm, 3 mm, 4 mm, or the like. That is, in a direction along a length of the first functional layer 20, a width of a second region 40 existing between the first region 30 closest to the first end and the edge of the first end is w1. A distance w2 between a first region 30 closest to a second end (an edge of the first functional layer 20) and the edge of the second end of the first functional layer 20 ranges from 0 µm to 4 mm, and for example, is 0, 100 µm, 300 µm, 500 µm, 700 µm, 1 mm, 2 mm, 3 mm, 4 mm, or the like.

When w2 = 0, there is no second region between the first region 30 closest to the second end of the first functional layer 20 and the edge of the second end of the first functional layer 20 (that is, the width w2 of the second region 40 between the first region 30 closest to the second end and the edge of the second end is 0). When w2 is not 0 (that is, 0 < w2 ≤ 4 mm), in the length direction of the first functional layer 20, there is a second region 40 between the first region 30 closest to the second end of the first functional layer 20 and the edge of the second end, and the width of the second region 40 is w2.

In a possible implementation, w1 and w2 may be the same or different.

In order to further improve both a lithium supplementation effect and wettability of the electrolyte solution, in some preferred embodiments, a ratio of a total area of the plurality of first regions 30 (that is, a sum of areas of the plurality of first regions 30) to a total area of the plurality of second regions 40 (that is, a sum of areas of the plurality of second regions 40) ranges from 0.7:1 to 3:1, and for example, is 0.7:1, 1:1, 1.5:1, 2:1, 2.5:1, 3:1, or the like.

A microscope may be used to capture contours of the first regions 30 and the second regions 40 to measure the ratio of the total area of the plurality of first regions 30 to the total area of the plurality of second regions 40.

Generally, there is a boundary between the first region 30 and the second region 40. With respective to the surface of the first current collector 10, the first region 30 is higher than the second region 40, that is, in the thickness direction of the first functional layer 20, a distance a between a portion, farthest from the first current collector 10, of the first region 30 and the first current collector 10 is greater than a distance b between a portion, farthest from the first current collector 10, of the second region 40 and the first current collector 10 (a> b).

In some embodiments, a height difference between the portion, farthest from the first current collector 10, of the first region 30 and the portion, farthest from the first current collector 10, of the second region 40 ranges from 0.1 µm to 8 µm (that is, a-b ranges from 0.1 µm to 8 µm), and for example, is 0.1 µm, 0.5 µm, 1 µm, 2 µm, 3 µm, 4 µm, 5 µm, 6 µm, 7 µm, 8 µm, or the like.

In a possible implementation, manners of measuring a height difference between the first region 30 and the second region 40 include but are not limited to: (1) sputtering the lithium-supplemented electrode plate by using a Cross-section Polisher (CP), to obtain a cross section, photographing the cross section by using a scanning electron microscope (SEM), and zooming in the cross section to a desired magnification for photographing, to obtain the height difference; and (2) using a 3D microscope to zoom in the cross section to a desired magnification for photographing, and then measuring the height difference by using a profilometer.

In some embodiments, the first functional layer 20 is provided with a first groove 21, and a first adhesive layer 81 covers the first groove 21. The first groove 21 may be used as a tab groove for disposing a tab. In some embodiments, the electrode plate further includes a first tab 91 and a first adhesive layer 81 formed on the surface of the first functional layer 20, and at least a part of the first tab 91 is located in the first groove 21 and is covered by the first adhesive layer 81 (that is, a part, located in the first groove 21, of the first tab 91 is covered by the first adhesive layer 81). In this way, a tab region can be protected and safety of the electrode plate and the battery can be improved. For example, this prevents lithium in a supplemented lithium region around the first tab from migrating to a positive tab region (corresponding to a tab groove in which a positive tab is located) during a charge-discharge process, and prevents a lithium deposition problem in a negative tab region accordingly caused.

In a possible implementation, the first adhesive layer 81 is disposed on a partial region of the surface of the first functional layer 20, that is, does not completely cover the first functional layer 20. The first adhesive layer 81 covers at least one first region 30.

In a possible implementation, at least a part of a bottom surface of the first groove 21 is a surface of the first current collector 10, that is, a part of the bottom surface of the first groove 21 exposes the first current collector 10, and the first electrode tab 91 may be connected to the first current collector 10 exposed on the bottom surface of the first groove 21, and specifically may be welded to the first current collector 10 exposed on the bottom surface of the first groove 21.

The electrode plate may be of a center-pull tab (CPT) structure, that is, the tab is disposed in the middle of the electrode plate, rather than at an end.

In a possible implementation, at least two sides of the first groove 21 are the first functional layer 20. In some embodiments, on a plane perpendicular to the thickness direction of the first current collector 10, one side of the first groove 21 is flush with one long side of the first current collector 10, and other sides are surrounded by the first functional layer 20, that is, the first groove 21 has an opening facing one long side of the first current collector 10. After the first tab 91 is provided, one end of the first tab 91 may extend out of the outer edge of the first current collector 10 through the opening. Specifically, the first tab 91 may extend out of the outer edge of the first current collector 10 through the opening along its length direction. A part, located in the first groove 21, of the first tab 91 (that is, a part that does not extend out of the outer edge of the first current collector 10) is covered by the first adhesive layer 81 (as shown in FIG. 12).

The length direction of the first electrode tab 91 is parallel to a length direction of the first region 30/the second region 40 (that is, the first tab 200 and the first region 30/the second region 40 extend in a same direction).

As shown in FIG. 11, a projection of the first groove 21 onto the first current collector 10 is a rectangle, one short side of which is flush with one long side of the first current collector 10, and the other three sides are surrounded by the first functional layer 20.

In a possible implementation, the first groove 21 has a first side and a second side opposite to each other, and a third side and a fourth side opposite to each other, the third side/the fourth side is located between the first side and the second side (the third side/fourth side connects the first side and the second side), and a direction from the first side to the second side is parallel to a direction from the first region to the second region.

For example, in FIG. 11 and FIG. 12, the first side is the left side, the second side is the right side, the third side is the lower side, and the fourth side is the upper side. The left side, right side, and lower side of the first groove 21 are all surrounded by the first functional layer 20, and there is no first functional layer 20 on the upper side (that is, the upper side of the first groove 21 is flush with an edge of the first functional layer 20). The direction from the first side to the second side is parallel to the length direction of the first functional layer 20, and the direction from the third side to the fourth side is parallel to the width direction of the first functional layer 20.

The first adhesive layer 81 extends to a surface, around the first groove 21, of the first functional layer 20. A part of the first adhesive layer 81 that is located on a surface, on the first side of the first groove 21, of the first functional layer 20 covers a1 first regions 30, where a1 ranges from 0 to 8, and for example, is 0, 1, 2, 3, 4, 5, 6, 7, 8, or the like. In other words, a quantity of first regions located on the first side of the first groove 21 and in contact with the first adhesive layer 81 is a1, that is, the surface of the first functional layer 20 includes a third region 85 located on the first side of the first groove 21 and covered by the first adhesive layer 81, and a quantity of first regions 30 extending into the third region 85 is a1.

For example, as shown in FIG. 11, a1 = 1.

In addition, a part of the first adhesive layer 81 that is located on a surface, on the second side of the first groove 21, of the first functional layer 20 covers a2 first regions 30, where a2 ranges from 0 to 8. In other words, a quantity of first regions 30 located on the second side of the first groove 21 and in contact with the first adhesive layer 81 is a2, that is, the surface of the first functional layer 20 includes a fourth region 86 located on the second side of the first groove 21 and covered by the first adhesive layer 81, and a quantity of first regions 30 extending into the fourth region 86 is a2.

For example, as shown in FIG. 11, a2 = 1.

In addition, a part of the first adhesive layer 81 that is located on a surface, on the third side of the first groove 21, of the first functional layer 20 is in contact with a3 first regions 30, where a3 ranges from 0 to 40, and for example, is 0, 2, 5, 8, 10, 12, 15, 18, 20, 22, 25, 28, 30, 32, 35, 38, 40, or the like. In other words, a quantity of first regions 30 located on the third side of the first groove 21 and in contact with the first adhesive layer 81 is a3, that is, the surface of the first functional layer 20 includes a fifth region 87 located on the third side of the first groove 21 and covered by the first adhesive layer 81, and a quantity of first regions 30 extending into the fifth region 87 is a3.

As shown in FIG. 11 and FIG. 12, a3 is also a total quantity of first regions 30 in contact with the first adhesive layer 81.

In a possible implementation, the first regions 30 (a1) extending into the third region 85 all extend into the fifth region 87, and the first regions 30 (a2) extending into the fourth region 86 all extend into the fifth region 87. A quantity of first regions 30 that extend into the fifth region 87 and that are connected to the first groove 21 is a4, and a3 = a1 + a2 + a4.

For example, as shown in FIG. 11, a3 = 4, where a1 = 1, a2 = 1, and a4 = 2.

In a possible implementation, the part of the first adhesive layer 81 on the surface, located on the first side of the first groove 21, of the first functional layer 20 has a width w31 ranging from 1 mm to 5 mm in the length direction of the first functional layer 20 (that is, a width of the third region 85 in the length direction of the first functional layer 20), for example, 1 mm, 1.5 mm, 2 mm, 2.5 mm, 3 mm, 3.5 mm, 4 mm, 4.5 mm, 5 mm, or the like.

In addition, the part of the first adhesive layer 81 on the surface, located on the second side of the first groove 21, of the first functional layer 20 has a width w32 ranging from 1 mm to 5 mm in the length direction of the first functional layer 20 (that is, a width of the fourth region 86 in the length direction of the first functional layer 20), for example, 1 mm, 1.5 mm, 2 mm, 2.5 mm, 3 mm, 3.5 mm, 4 mm, 4.5 mm, 5 mm, or the like.

w31 and w32 may be the same or different. A total width of the first adhesive layer 81 in the length direction of the first functional layer 20 is substantially equal to a sum of w31, a width of the first groove 21 in the length direction of the first functional layer 20, and w32.

In a possible implementation, end edges of two opposite ends of the first region 30 are respectively flush with edges of two opposite sides of the first functional layer 20. As shown in FIG. 11 and FIG. 12, a length of any first region 30 in the width direction of the first functional layer 20 is equal to a length of the first functional layer 20 at which the first region 30 is located. For example, a length of first regions 30 located on the two opposite sides (the first side and the second side) of the first groove 21 is equal to a width of a part of the first functional layer 20 located on the two opposite sides of the first groove 21.

The length direction of the first functional layer 20 is also the length direction of the first current collector 10, and the width direction of the first functional layer 20 is also the width direction of the first current collector 10. The width of the first current collector 10 is substantially equal to a maximum width of the first functional layer 20 (that is, the width of the first functional layer 20 in FIG. 11 and FIG. 12 located on two opposite sides of the first groove 21).

In a possible implementation, as shown in FIG. 11, at least one end portion of the first current collector 10 may be further provided with a first foil uncoating region 11 in which no first functional layer 20 is disposed.

An embodiment of the present application further provides a battery, including a first electrode plate, a separator, and a second electrode plate having a polarity opposite to that of the first electrode plate, which are stacked in sequence. The first electrode plate includes the electrode plate described above.

In a possible implementation, the battery includes an electrochemical cell. The electrochemical cell includes a first electrode plate, a separator, and a second electrode plate stacked in sequence. The electrochemical cell may be specifically a wound electrochemical cell formed by stacking the first electrode plate, the separator, and the second electrode plate in sequence and then winding them, where the winding may be performed along a length direction of the first electrode plate/the separator/the second electrode plate to form a wound electrochemical cell. In the wound electrochemical cell, the first electrode plate, the separator, and the second electrode plate each have a bending portion, and straight portions connected to both ends of each bending portion. A direction from one bending portion to another bending portion is parallel to a length direction of the wound electrochemical cell, and a direction from one straight portion to another straight portion is parallel to a width direction of the wound electrochemical cell.

The separator severs to separate the first electrode plate and the second electrode plate to prevent them from coming into contact with each other and short-circuiting. A thickness of the separator may range from 5 µm to 16 µm, and for example, is 5 µm, 8 µm, 10 µm, 13 µm, 16 µm, or the like. The separator may be a conventional separator in the art, and for example, includes a substrate or a coating separator with a coating on a substrate

In a possible implementation, the second electrode plate includes a second current collector and a second functional layer 92 disposed on a surface of the second current collector. The second electrode plate has two opposite ends (denoted as a fifth end and a sixth end, respectively), and at least one end thereof has a second foil uncoating region 93 without a coating. Except for the second foil uncoating region 93, the rest of the second electrode plate is provided with the second functional layer 92. A part at which the second functional layer 92 and the second foil uncoating region 93 are connected usually has an uneven structure. In order to avoid damaging the separator and improve safety performance of a battery, a second adhesive layer 82 may be disposed on a part that is on at least one end of the second electrode plate and that is covered by the first electrode plate. The part, covered by the first electrode plate, of the second electrode plate is usually also a part, covered by the separator, of the second electrode plate. The second functional layer 92 is an active material layer of the second electrode plate.

As shown in FIG. 13, a second adhesive layer 82 is disposed on a region that is on at one end (the fifth end) of the second electrode plate and that is covered by the first electrode plate, and a quantity of first regions 30 of the first electrode plate that correspond to the second adhesive layer 82 is x, where 0 ≤ x ≤ 20, and x is, for example, 0, 1, 2, 3, 4, 5, 6, 7, 8, 9, 10, 11, 12, 13, 14, 15, 16, 17, 18, 19, or 20.

In a possible implementation, as shown in FIG. 11 and FIG. 12, the first electrode plate has two opposite ends (denoted as a third end and a fourth end, respectively), and one end (the third end) thereof has a first end covering region 22. The first end covering region 22 corresponds to a position of the second adhesive layer 82 of the second electrode plate, that is, the first end covering region 22 and the second adhesive layer 82 cover each other (a projection of the second adhesive layer 82 onto the first electrode plate basically coincides with the first end covering region 22). A width w4 of the first end covering region 22 in the length direction of the first electrode plate/the second electrode plate is equal to a width w6 of the second adhesive layer 82 in the length direction of the first electrode plate/the second electrode plate. There are x first regions 30 in the first end covering region 22.

In some embodiments, the width w6 of the second adhesive layer 82 in the length direction of the second electrode plate ranges from 3 mm to 5 mm, and w6 is, for example, 3 mm, 3.5 mm, 4 mm, 4.5 mm, 5 mm, or the like.

As shown in FIG. 13, the second adhesive layer 82 covers at least a part of the second foil uncoating region 93, and extends from the second foil uncoating region 93 to the surface of the second functional layer 92.

In addition, as shown in FIG. 11 to FIG. 13, the other end (the fourth end) of the first electrode plate has a second end covering region 23 covering the other end (the sixth end) of the second electrode plate, that is, a projection of the sixth end of the second electrode plate onto the first electrode plate is located in the second end covering region 23 and does not go beyond the second end covering region 23. There is no foil uncoating region on the sixth end of the second electrode plate (that is, the second functional layer 92 is flush with an outer edge of the second current collector), and the second adhesive layer 82 may not be disposed.

In some embodiments, a width w5 of the second end covering region 23 in the length direction of the first electrode plate ranges from 3 mm to 5 mm, and for example, is 3 mm, 3.5 mm, 4 mm, 4.5 mm, 5 mm, or the like.

As shown in FIG. 13, a third adhesive layer corresponding to a position of the first tab 91/the first groove 21 of the first electrode plate is disposed on the surface of the second electrode plate. A projection of the third adhesive layer onto the first electrode plate may cover the first groove 21 to further prevent lithium deposition at a negative electrode.

A first projection of the third adhesive layer onto the first electrode plate covers at least one first region 30 and satisfies the following: a part of the first projection located on the first side of the first groove 21 covers 0 to 8 first regions 30, for example, covers 0, 1, 2, 3, 4, 5, 6, 7, or 8 first regions 30, a quantity of which may be equal to or not equal to a1; a part of the first projection located on the second side of the first groove 21 covers 0 to 8 first regions 30, for example, covers 0, 1, 2, 3, 4, 5, 6, 7, or 8 first regions 30, a quantity of which may be equal to or not equal to a2; and a part of the first projection located on the third side of the first groove 21 covers 0 to 40 first regions 30, for example, covers 0, 2, 5, 8, 10, 12, 15, 18, 20, 22, 25, 28, 30, 32, 35, 38, or 40 first regions 30, a quantity of which may be equal to or not equal to a3.

In a possible implementation, the part of the first projection located on the first side of the first groove 21 has a width ranging from 1 mm to 5 mm in the length direction of the first functional layer 20, for example, 1 mm, 1.5 mm, 2 mm, 2.5 mm, 3 mm, 3.5 mm, 4 mm, 4.5 mm, 5 mm, or the like, where the width may be equal to or not equal to w31; and the part of the first projection located on the second side of the first groove 21 has a width ranging from 3 mm to 5 mm in the length direction of the first functional layer 20, for example, 1 mm, 1.5 mm, 2 mm, 2.5 mm, 3 mm, 3.5 mm, 4 mm, 4.5 mm, 5 mm, or the like, where the width may be equal to or not equal to w32.

In a possible implementation, the first projection of the third adhesive layer onto the first electrode plate may cover the first adhesive layer 81, or be covered by the first adhesive layer 81, and for example, the two may coincide with each other.

In a possible implementation, the second electrode plate is provided with a second tab, and in a width direction of the electrochemical cell, the first tab 91 does not overlap the second tab. That is, a projection of the first tab 91 perpendicular to a width direction of the electrochemical cell does not overlap a projection of the second tab perpendicular to the width direction of the electrochemical cell.

In some embodiments, the second functional layer 92 is provided with a second groove 921 and a fourth adhesive layer 84 covering the second groove 921, and the second tab is at least partially located in the second groove 921 and is covered by the fourth adhesive layer 84 (that is, a part, located in the second groove 921, of the second tab is covered by the second adhesive layer 82).

In a possible implementation, the second groove 921 serves as a tab groove for disposing a tab, at least a part of a bottom surface of the second groove 921 is a surface of the second current collector (that is, a part of the bottom surface of the second groove 921 exposes the second current collector), and the second tab may be connected to the second current collector exposed on the bottom surface of the second groove 921, and specifically may be welded to the second current collector exposed on the bottom surface of the second groove 921.

As shown in FIG. 13, the second electrode plate may be of a center-pull tab structure, that is, the second tab is disposed in the middle of the second electrode plate, rather than at an end.

In a possible implementation, at least two sides of the second groove 921 are the second functional layer 92. In some embodiments, as shown in FIG. 13, on a plane perpendicular to the thickness direction of the second current collector, one side of the second groove 921 is flush with one long side of the second current collector, and other sides are surrounded by the second functional layer 92, that is, the second groove 921 has an opening facing one long side of the second current collector. After the second tab is provided, one end of the second tab may extend out of the outer edge of the second current collector through the opening. Specifically, the second tab may extend out of the outer edge of the second current collector through the opening along its length direction. A part, located in the second groove 921, of the second tab (that is, a part that does not extend out of the outer edge of the first current collector 10) is covered by the second adhesive layer 82. A length direction of the second tab is parallel to a width direction of the second electrode plate.

As shown in FIG. 13, a projection of the second groove 921 onto the second current collector is a rectangle, one short side of which is flush with one long side of the second current collector, and the other three sides are surrounded by the second functional layer.

In a possible implementation, the fourth adhesive layer 84 extends to a surface of the second functional layer 92 around the second groove 921 and is bonded to the second functional layer 92 around the second groove 921.

In a possible implementation, the second groove 921 has a fourth side, a fifth side, and a sixth side, and a direction from the fourth side to the fifth side is parallel to the length direction of the second electrode plate. A projection of the fourth adhesive layer 84 onto the first electrode plate covers at least one first region 30 and satisfies the following: a projection of a part, located on the fourth side of the second groove, of the fourth adhesive layer 84 onto the first electrode plate covers 0 to 8 first regions 30, for example, covers 0, 1, 2, 3, 4, 5, 6, 7 or 8 first regions 30, a quantity of which may be equal to or not equal to a1; a projection of a part, located on the fifth side of the second groove, of the fourth adhesive layer 84 onto the first electrode plate covers 0 to 8 first regions 30, for example, covers 0, 1, 2, 3, 4, 5, 6, 7 or 8 first regions 30, a quantity of which may be equal to or not equal to a2; and a projection of a part, located on the sixth side of the second groove, of the fourth adhesive layer 84 onto the first electrode plate covers 0 to 40 first regions 30, for example, covers 0, 2, 5, 8, 10, 12, 15, 18, 20, 22, 25, 28, 30, 32, 35, 38, or 40 first regions 30, a quantity of which may be equal to or not equal to a3.

In a possible implementation, the part, located on the fourth side of the second groove, of the fourth adhesive layer 84 may have a width ranging from 1 mm to 5 mm in the length direction of the second electrode plate, for example, 1 mm, 1.5 mm, 2 mm, 2.5 mm, 3 mm, 3.5 mm, 4 mm, 4.5 mm, 5 mm, or the like, where the width may be equal to or not equal to w31; and The part, located on the fifth side of the second groove, of the fourth adhesive layer 84 may have a width ranging from 3 mm to 5 mm in the length direction of the second electrode plate, for example, 1 mm, 1.5 mm, 2 mm, 2.5 mm, 3 mm, 3.5 mm, 4 mm, 4.5 mm, 5 mm, or the like, where the width may be equal to or not equal to w32.

In a possible implementation, parameters such as a shape and a size of the second groove 921 may be the same as or different from those of the first groove 21, and parameters such as a shape and an area of the fourth adhesive layer 84 may be the same as or different from those of the first adhesive layer 81.

Thicknesses of the first adhesive layer 81, the second adhesive layer 82, the third adhesive layer, and the fourth adhesive layer 84 each may range from 10 µm to 16 µm, and for example, is 10 µm, 11 µm, 12 µm, 13 µm, 14 µm, 15 µm, 16 µm, or the like. The first adhesive layer 81, the second adhesive layer 82, the third adhesive layer, and the fourth adhesive layer 84 may be specifically made of adhesive tape.

It should be noted that, that a specific adhesive layer (or its projection) covers the first region 30 as described above means that, in the length direction of the first functional layer 20, two opposite sides of the first region 30 covered by the adhesive layer are both located within the projection of the adhesive layer onto the surface of the first functional layer 20 (that is, the first region 30 covered by the adhesive layer does not extend out of an outer edge of the projection of the adhesive layer onto the surface of the first functional layer 20), and in the width direction of the first functional layer 20, the first region 30 covered by the adhesive layer may be partially located within the projection of the adhesive layer onto the surface of the first functional layer 20, and partially located outside the projection of the adhesive layer onto the surface of the first functional layer 20, or entirely located within the projection of the adhesive layer onto the surface of the first functional layer 20.

For example, as shown in FIG. 11 and FIG. 12, the first adhesive layer 81 covers four first regions 30, and in the length direction of the first functional layer 20, two opposite sides of each of the four first regions 30 are both located within the projection of the first adhesive layer 81 onto the surface of the first functional layer 20; and in the width direction of the first functional layer 20, the four first regions 30 partially extend into the projection of the first adhesive layer 81 onto the surface of the first functional layer 20, and partially are located outside the projection of the first adhesive layer 81 onto the surface of the first functional layer 20.

The battery described above may include a lithium-ion battery, which may be prepared by using a conventional method in the art. A preparation process generally includes steps of winding, packaging, liquid injection, aging, formation, secondary sealing, sorting, packing, and the like. For example, the first electrode plate, the separator, and the second electrode plate may be stacked and placed, and then wound to form a bare electrochemical cell, and the bare electrochemical cell is placed in an outer packaging foil (such as an aluminum-plastic film). Then, an electrolyte solution is injected into the electrochemical cell, and then the electrochemical cell is made into a soft-pack lithium-ion battery through processes such as vacuum packaging, standing, formation (for example, charging at a 0.1C constant current to a SOC (state of charge) of 4%, and then charging at a 0.2C constant current to a SOC of 10%), and shaping.

In order to illustrate that the electrode plate provided in the present application can improve initial efficiency of a battery while reducing a battery expansion effect, the following tests were conducted on a produced electrode plate.

### Test 1: Surface morphology test of a first region 30 and a second region 40

A scanning electron microscope (SEM) was used for photographing with a magnification range of 500x to 1.0kx. Refer to FIG. 2, which is a SEM image captured at a magnification of 50x. Widths of the first region 30 and the second region 40 were measured by using a ruler.

Herein, a spacing between adjacent second regions 40, namely, a width of the first region 30, was provided as an example, and measured values at H1, H2, and H3 in the figure were listed, where H1 = 537 µm, H2 = 372 µm, and H3 = 416 µm.

Herein, a spacing between adjacent first regions 30, namely, a width of the second region 40, was provided as an example, and measured values at H4 and H5 in the figure were listed, where H4 = 267 µm and H5 = 279 µm.

### Test 2: Element test of a first region 30 and a second region 40

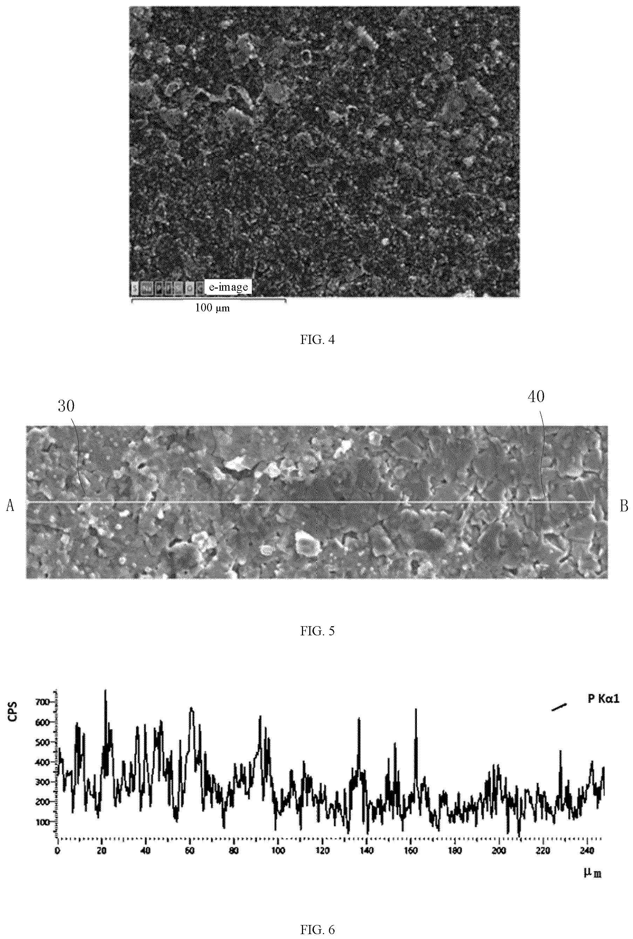

Herein, an electrode plate provided in an embodiment of the present application was selected. A position at which a SEM image was captured was further analyzed by using an X-ray energy dispersive spectrometer (Energy Dispersive Spectrometer, EDS for short). Refer to FIG. 3, which is an EDS area scan image of a 500x SEM image. Refer to FIG. 4, which is an EDS area scan image of a 500x SEM image at a dashed line position within a dotted box in FIG. 3.

The horizontal line AB shown in FIG. 5 represents a linear path position extending from the first region 30 to the second region 40. An X-ray Energy Dispersive Spectrometer (EDS) analysis was used to measure element distribution at a position of the horizontal line AB shown in FIG. 5. For a SEM element content line scan image measured thereof, refer to FIG. 6, FIG. 7, and FIG. 8.

FIG. 6 is a distribution trend diagram of a phosphorus element, where a horizontal axis represents a position and a vertical axis represents a content of the phosphorus element. It can be learned from FIG. 6 that the content of the element phosphorus decreases from the first region 30 to the second region 40.

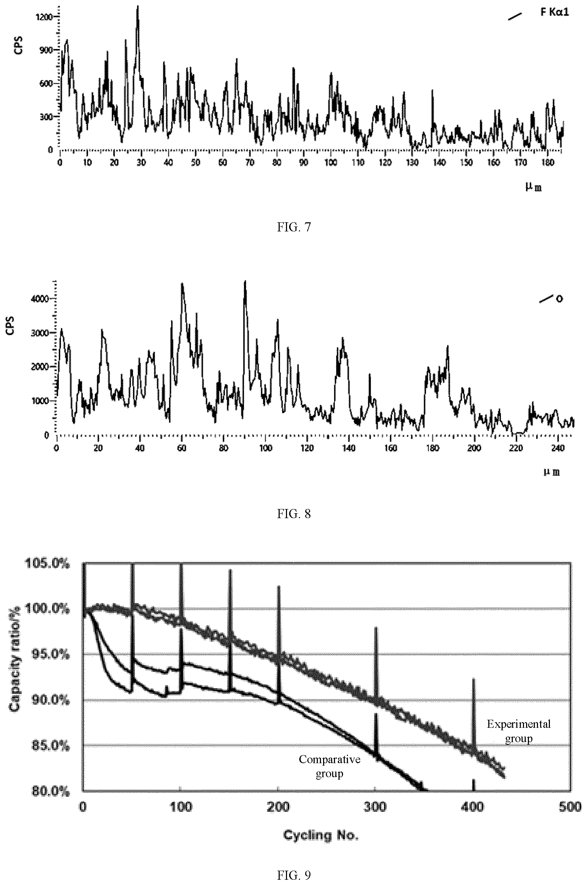

FIG. 7 is a distribution trend diagram of a fluorine element, where a horizontal axis represents a position and a vertical axis represents a content of the fluorine element. It can be learned from FIG. 7 that the content of the element fluorine decreases from the first region 30 to the second region 40.

FIG. 8 is a distribution trend diagram of an element oxygen, where a horizontal axis represents a position and a vertical axis represents a content of the element oxygen. It can be learned from FIG. 8 that the content of the element oxygen decreases from the first region 30 to the second region 40.

### Test 3: Cycling test and expansion test

Cycling tests and expansion tests were conducted on batteries from two comparative groups and batteries from two experimental groups. An only difference between the batteries used in the two comparative groups and the batteries used in the two experimental groups is that the batteries used in the two experimental groups use electrode plates provided in the present application as negative electrode plates, whereas the batteries used in the comparative groups use conventional negative electrode plates and contain no metallic lithium.

A testing process includes the following steps:
Step 1: Placing the battery in a temperature environment of 5°C±2°C, and letting it stand for 10 minutes.
Step 2: Discharging the battery to a lower voltage limit at a battery discharge rate of 0.2C, and letting it stand for 10 minutes.
Step 3: Charging the battery to an upper limit voltage at a battery charging rate of 0.7C, cutting off the charging at 0.05C, and letting it stand for 10 minutes.
Step 4: Discharging the battery to the lower voltage limit at a battery discharge rate of 0.2C, and then conducting an initial capacity test.
Step 5: Letting the battery stand for 10 minutes.
Step 6: Charging the battery to the upper voltage limit at a charging rate of 3C, cutting off the charge at 0.05C, and then testing a thickness of the battery.
Step 7: Placing the battery in a temperature environment of 25°C±2°C, and letting it stand for 10 minutes.
Step 8: Discharging the battery to the lower voltage limit at a battery discharge rate of 1C, and letting it stand for 10 minutes.
Step 9: Charging the battery to the upper limit voltage at a battery charging rate of 3C, cutting off the charging at 0.05C, and letting it stand for 10 minutes.

Step 9: Repeating step 8 and step 9 for 1000 cycles, where in cycles 0 to 200, after every 50 cycles, testing the thickness of the battery in a fully charged state; in cycles 200 to 1000, after every 100 cycles, testing the thickness of the battery in a fully charged state, and repeating step 3 and step 4 to conduct a capacity test in a temperature environment of 25°C; and after 1000 cycles, testing the thickness of the battery in a fully charged state.

### Test 4: Capacity test

Batteries with a same target capacity and different surface densities of supplemented lithium were processed to obtain four experimental group batteries and one comparative group battery with different target capacities. These batteries were placed in a constant temperature environment of 25°C, and charged to 4.48 V with a constant current and constant voltage at a battery charging rate of 1C, then the voltage charging was cut off at 0.05C, and then the batteries were let stand for 5 minutes, and then discharged to 3 V at a battery discharge rate of 0.2C. Comparison was made on capacity data at 3 V Results of the comparison were shown in the following Table 1-4.

**Table 1**

| Graphite doped with silicon | Comparative group | Experimental group 1 | Experimental group 2 | Experimental group 3 | Experimental group 4 |
|---|---|---|---|---|---|
| Target capacity (mAh) | 2430 | | | | |
| Surface density of lithium in lithium material layer (mg/cm²) | 0 | 0.12 | 0.15 | 0.17 | 0.19 |
| Silicon doping ratio | 15% | 7% | 10% | 13% | 15% |
| Content ratio of element oxygen to element silicon in first region | 4:1 | 5:1 | 5.3:1 | 5.6:1 | 5.8:1 |
| Content ratio of element fluorine to element phosphorus in first region | 6:1 | 7:1 | 7.3:1 | 7.4:1 | 7.5:1 |
| Capacity at 3 V (mAh) | 2068 | 2438 | 2442 | 2455 | 2554 |
| Expansion rate after 100 charge-discharge cycles | 10.59% | 6.09% | 7.85% | 8.51% | 8.89% |
| Initial efficiency | 73.15% | 91.8% | 92.1% | 92% | 92.3% |

**Table 2**

| Graphite doped with silicon | Comparative group | Experimental group 1 | Experimental group 2 | Experimental group 3 |
|---|---|---|---|---|
| Target capacity (mAh) | 4000 | | | |
| Surface density of lithium in lithium material layer (mg/cm²) | 0 | 0.13 | 0.15 | 0.17 |
| Silicon doping ratio | 15% | 8% | 10% | 15% |
| Content ratio of element oxygen to element silicon in first region | 4:1 | 5:1 | 5.3:1 | 5.6:1 |
| Content ratio of element fluorine to element phosphorus in first region | 6:1 | 7.5:1 | 7.6:1 | 7.7:1 |
| Capacity at 3 V (mAh) | 3429 | 4025 | 4034 | 4078 |
| Expansion rate after 100 charge-discharge cycles | 7.52% | 6.23% | 6.60% | 6.77% |
| Initial efficiency | 76.02% | 89.68% | 90.73% | 91.32% |

**Table 3**

| Hard carbon doped with silicon | Comparative group | Experimental group 1 | Experimental group 2 | Experimental group 3 | Experimental group 4 |
|---|---|---|---|---|---|
| Target capacity (mAh) | 4720 | | | | |
| Surface density of lithium in lithium material layer (mg/cm²) | 0 | 0.17 | 0.19 | 0.22 | 0.26 |
| Silicon doping ratio | 15% | 7% | 10% | 15% | 20% |
| Content ratio of element oxygen to element silicon in first region | 4:1 | 5.6:1 | 5.8:1 | 6:1 | 6.6:1 |
| Content ratio of element fluorine to element phosphorus in first region | 6:1 | 7.7:1 | 7.8:1 | 7.9:1 | 8:1 |
| Capacity at 3 V (mAh) | 4363 | 4751 | 4766 | 4775 | 4781 |
| Expansion rate after 100 charge-discharge cycles | 9.63% | 6.85% | 6.99% | 7.39% | 7.51% |
| Initial efficiency | 77.74% | 88.22% | 89.29% | 90.04% | 91.05% |

**Table 4**

| Hard carbon doped with silicon | Comparative group | Experimental group 1 | Experimental group 2 | Experimental group 3 |
|---|---|---|---|---|
| Target capacity (mAh) | 4300 | | | |
| Surface density of lithium in lithium material layer (mg/cm²) | 0 | 0.21 | 0.22 | 0.23 |
| Silicon doping ratio | 15% | 7% | 10% | 15% |
| Content ratio of element oxygen to element silicon in first region | 4:1 | 5.9:1 | 6:1 | 6.3:1 |
| Content ratio of element fluorine to element phosphorus in first region | 6:1 | 7.9:1 | 8.1:1 | 8.2:1 |
| Capacity at 3 V (mAh) | 4000 | 4312 | 4318 | 4324 |
| Expansion rate after 100 charge-discharge cycles | 5.73% | 4.51% | 5.24% | 5.49% |
| Initial efficiency | 77.05% | 89.53% | 89.79% | 89.88% |

It can be seen from Table 1 to Table 4 that initial efficiency of the battery in the experimental group is higher than that of a battery in a corresponding comparative group, which indicates that the present application can significantly improve low initial efficiency of lithium-ion batteries.

Capacities at 3 V of experimental groups 1 to 4 are significantly improved, compared with that of comparative group 1. In batteries with different target capacities, first regions 30 of their electrode plates use metallic lithium with different surface densities, and the battery capacities are improved and reach target capacity values.

For a detection result of step 9, refer to FIG. 10. It can be seen from FIG. 10 that a horizontal axis represents a quantity of charge-discharge cycles, and a vertical axis represents an expansion rate. The battery provided in the present application has a lower expansion rate than the existing battery in a fully charged state, and an effect of reducing expansion of the battery is significant.

Refer to FIG. 9, which is a comparison chart of cycling performance curves of the battery provided in the present application and a conventional battery. A horizontal axis represents a quantity of charge-discharge cycles, and a vertical axis represents a capacity retention rate of the battery. It can be seen from FIG. 9 that a capacity of the battery provided in the present patent is reduced to 80% after 450 charge-discharge cycles are completed, and a capacity of the conventional battery is reduced to 80% after 350 charge-discharge cycles are completed. Therefore, according to the battery provided in the present patent, a cycling performance of the battery is improved by about 100 charge-discharge cycles, and a corresponding capacity retention rate of the battery is improved by about 5% to 15%. This shows that improvement in the present application has a significant effect on improving the capacity of the battery, and also significantly improves cycling performance of the battery.

In the descriptions of the present application, it should be understood that the orientations or positional relationships indicated by the terms "center", "length", "width", "thickness", "top", "bottom", "upper", "lower", "left", "right", "front", "back", "vertical", "horizontal", "inner", "outer", "axial", "circumferential", and the like are based on the orientations or positional relationships shown in the accompanying drawings. Such terms are merely intended to facilitate the descriptions of the present application and simplify the descriptions, without indicating or implying that the positions or components mentioned in the present application must have specific orientations, or be constructed and operated in a specific orientation, and therefore shall not be construed as a limitation on the present application.

In addition, the terms "first" and "second" are merely intended for a purpose of description, and shall not be understood as an indication or implication of relative importance or implicit indication of the number of indicated technical features. Therefore, features limited by "first" or "second" may explicitly or implicitly include one or more of the features. In the description of the present application, "a plurality of" means at least two, for example, two or three, unless otherwise explicitly and specifically defined.

## Claims

1. An electrode plate, **characterized by** comprising a first current collector (10) and a first functional layer (20) disposed on at least one side of the first current collector (10), wherein a plurality of first regions (30) and a plurality of second regions (40) are alternately distributed on a surface of the first functional layer (20); and
a content ratio of an element oxygen to an element silicon in the first functional layer (20) within the first region (30) is greater than 4: 1.

2. The electrode plate according to claim 1, **characterized in that** a carbon element, the element oxygen, an element fluorine, an element phosphorus, and the element silicon are comprised in the first region (30).

3. The electrode plate according to claim 2, **characterized in that** a content ratio of the element fluorine to the element phosphorus in the first functional layer (20) within the first region (30) is greater than 7: 1.

4. The electrode plate according to claim 1, **characterized in that** a carbon element, the element oxygen, an element fluorine, an element phosphorus, and the element silicon are comprised in the second region (40).

5. The electrode plate according to claim 4, **characterized in that** a content ratio S1:S2 of the element oxygen to the element silicon in the first functional layer (20) within the second region (40) satisfies: 2:1 ≤ S1:S2 ≤ 4:1.

6. The electrode plate according to claim 5, **characterized in that** a content ratio S3:S4 of the element fluorine to the element phosphorus in the first functional layer (20) within the second region (40) satisfies: 6:1 ≤ S3:S4 ≤ 7:1.

7. The electrode plate according to any one of claims 1 to 6, **characterized in that** a content of the element fluorine in the first functional layer (20) located in the first region (30) is greater than a content of the element fluorine in the first functional layer (20) located in the second region (40).

8. The electrode plate according to any one of claims 1 to 6, **characterized in that** a content of the element phosphorus in the first functional layer (20) located in the first region (30) is greater than a content of the element phosphorus in the first functional layer (20) located in the first region (30).

9. The electrode plate according to any one of claims 1 to 6, **characterized in that** a content of the element oxygen in the first functional layer (20) located in the first region (30) is greater than a content of the element oxygen in the first functional layer (20) located in the second region (40).

10. The electrode plate according to any one of claims 1 to 6, **characterized in that** a width of the second region (40) ranges from 0 µm to 4 mm; and/or
a width of the first region (30) ranges from 100 µm to 4 mm.

11. The electrode plate according to any one of claims 1 to 6, **characterized in that** the first functional layer (20) comprises active material particles; and
the active material particles comprise at least one of a silicon material and a silicon oxide material as well as a carbon material, wherein a mass of the silicon material and/or the silicon oxide material accounts for 7% to 50% of a total mass of the active material particles; or
the active material particles comprise a carbon material and graphite; or
the active material particles comprise at least one of a silicon material and a silicon oxide material as well as a carbon material, wherein a mass of the silicon material and/or the silicon oxide material accounts for 7% to 50% of a total mass of the active material particles.

12. The electrode plate according to claim 1, **characterized in that** a first included angle is formed between an extension direction of the first region (30) and a width direction of the first functional layer (20), and the first included angle ranges from 0° to 45°; and/or
a ratio of a total area of the plurality of first regions (30) to a total area of the second regions (40) ranges from 0.7:1 to 3:1; and/or
with respective to a surface of the first current collector (10), a portion, farthest from the first current collector (10), of the first region (30) is higher than the second region (40), and a height difference between the portion, farthest from the first current collector (10), of the first region (30) and a portion, farthest from the first current collector (10), of the second region (40) ranges from 0.1 µm to 8 µm.

13. The electrode plate according to claim 12, **characterized in that** the electrode plate further comprises a first tab (91) and a first adhesive layer (81) that is formed on a surface of the first functional layer (20), the first functional layer (20) is provided with a first groove (21), at least a part of the first tab (91) is located in the first groove (21) and is covered by the first adhesive layer (81), and the first adhesive layer (81) covers at least one of the first regions (30).

14. The electrode plate according to claim 13, **characterized in that** the first groove (21) has a first side, a second side, and a third side, and a direction from the first side to the second side is parallel to a length direction of the first functional layer (20);
a part of the first adhesive layer (81) that is located on a surface, on the first side of the first groove (21), of the first functional layer (20) covers 0 to 8 of the first regions (30); and/or
a part of the first adhesive layer (81) that is located on a surface, on the second side of the first groove (21), of the first functional layer (20) covers 0 to 8 of the first regions (30); and/or
a part of the first adhesive layer (81) that is located on a surface, on the third side of the first groove (21), of the first functional layer (20) covers 0 to 40 of the first regions (30); and/or
a part of the first adhesive layer (81) that is located on a surface, on the first side of the first groove (21), of the first functional layer (20) has a width ranging from 1 mm to 5 mm in the length direction of the first functional layer (20); and/or
a part of the first adhesive layer (81) that is located on a surface, on the second side of the first groove (21), of the first functional layer (20) has a width ranging from 1 mm to 5 mm in the length direction of the first functional layer (20).

15. A battery, comprising a seal housing and an electrochemical cell located inside the seal housing, **characterized in that** the electrochemical cell comprises a first electrode plate and a second electrode plate, the first electrode plate is the electrode plate according to any one of claims 1 to 14, and a polarity of the second electrode plate is opposite to a polarity of the first electrode plate.

16. The battery according to claim 15, **characterized in that** a second adhesive layer (82) is disposed on a region that is on one end of the second electrode plate and that is covered by the first electrode plate, and a quantity of the first regions (30) of the first electrode plate that correspond to the second adhesive layer (82) ranges from 0 to 20; and/or
the second electrode plate comprises a second current collector and a second functional layer (92) disposed on a surface of the second current collector, one end of the second electrode plate has a second foil uncoating region (93) on which the second functional layer (92) is not disposed, and the second adhesive layer (82) covers at least a part of the second foil uncoating region (93) and extends from the second foil uncoating region (93) to the surface of the second functional layer (92); and/or
a width of the second adhesive layer (82) in a length direction of the second electrode plate ranges from 3 mm to 5 mm.

17. The battery according to claim 16, **characterized in that** the first functional layer (20) is provided with a first groove (21), and a third adhesive layer corresponding to a position of the first groove (21) is disposed on a surface of the second electrode plate; and/or
the second electrode plate comprises a second current collector and a second functional layer (92) disposed on a surface of the second current collector, the second functional layer (92) is provided with a second groove (921) and a fourth adhesive layer (84) covering the second groove (921), the second electrode plate is provided with a second tab, and the second tab is at least partially located in the second groove (921) and is covered by the fourth adhesive layer (84).

18. The battery according to claim 17, **characterized in that** the first groove (21) has a first side, a second side, and a third side, a first projection of the third adhesive layer onto the first electrode plate covers at least one of the first regions (30), and satisfies the following: a part of the first projection on the first side of the first groove (21) covers 0 to 8 of the first regions (30); and/or
a part of the first projection on the second side of the first groove (21) covers 0 to 8 of the first regions (30); and/or
a part of the first projection on the third side of the first groove (21) covers 0 to 40 of the first regions (30); and/or
the second groove (921) has a fourth side, a fifth side, and a sixth side, a projection of the fourth adhesive layer (84) onto the first electrode plate covers at least one of the first regions (30), and satisfies the following: a projection of a part of the fourth adhesive layer (84) on the fourth side of the second groove (921) onto the first electrode plate covers 0 to 8 of the first regions (30); and/or
a projection of a part of the fourth adhesive layer (84) on the fifth side of the second groove (921) onto the first electrode plate covers 0 to 8 of the first regions (30); and/or
a projection of a part of the fourth adhesive layer (84) on the sixth side of the second groove (921) onto the first electrode plate covers 0 to 40 of the first regions (30).
